# EUROPÄISCHE PATENTSCHRIFT

(11) **EP 3 205 898 B1**
(45) Veröffentlichungstag und Bekanntmachung des Hinweises auf die Patenterteilung: **10.04.2019**
(21) Anmeldenummer: 16155046.2
(22) Anmeldetag: 10.02.2016
(51) Int. Cl.: F16D 3/84

(54) **SCHUTZVORRICHTUNG FÜR EINE GELENKWELLE SOWIE SCHUTZANORDNUNG MIT GELENKWELLE UND EINER SOLCHEN SCHUTZVORRICHTUNG**
PROTECTIVE DEVICE FOR AN ARTICULATED SHAFT AND PROTECTION ASSEMBLY WITH AN ARTICULATED SHAFT AND SUCH A PROTECTION DEVICE
DISPOSITIF DE PROTECTION POUR UN ARBRE DE TRANSMISSION ET SYSTEME DE PROTECTION COMPRENANT UN ARBRE DE TRANSMISSION ET UN TEL SYSTEME DE PROTECTION

(43) Veröffentlichungstag der Anmeldung: 16.08.2017
(73) Patentinhaber: GKN Walterscheid GmbH, 53797 Lohmar (DE)
(72) Erfinder: LITTAU, Matthias, 53347 Alfter (DE); HECTOR, Martin, 53721 Siegburg (DE); ADAMEK, Wolfgang, 53797 Lohmar (DE)
(74) Vertreter: Neumann Müller Oberwalleney & Partner Patentanwälte

(56) Entgegenhaltungen:
- EP-A1- 0 086 606
- EP-B1- 0 918 951
- DE-C1- 19 629 998
- GB-A- 2 480 523

## Beschreibung

Die Erfindung betrifft eine Schutzvorrichtung für eine Gelenkwelle mit einem Befestigungselement, einem rohrförmigen Schutztopf und eine Verriegelungseinrichtung. Das Befestigungselement ist derart ausgebildet, dass es um einen aus einem Gehäuse ragenden Wellenzapfen positionierbar und am Gehäuse befestigbar ist. Der Schutztopf erstreckt sich entlang einer Längsachse und ist derart ausgebildet, dass er um eine mit dem Wellenzapfen verbundene Gelenkwelle positionierbar ist. Die Verriegelungseinrichtung dient zum Befestigen des Schutztopfes an dem Befestigungselement.

Eine solche Schutzvorrichtung ist aus der EP 0 918 951 B1 bekannt. Die dort beschriebene Schutzvorrichtung weist eine Scheibe auf, die an einem Getriebegehäuse befestigt werden kann, wobei aus dem feststehenden Getriebegehäuse ein Wellenzapfen vorsteht. An dem Wellenzapfen lässt sich eine Gelenkwelle mit einer Schutzabdeckung anschließen. Die Schutzvorrichtung weist ferner eine Hülse auf, die rohrförmig gestaltet ist und über den Umfang einteilig geschlossen ausgebildet ist. Die Hülse ist mit einer inneren Kante der Scheibe in Eingriff und über Spannclips an der Kante festgeklemmt und kann von dieser auch wieder gelöst werden. Die Gelenkwelle ist durch die Hülse hindurchgeführt.

Aufgabe der vorliegenden Erfindung ist es, eine Schutzvorrichtung der eingangs genannten Art bereitzustellen, bei der der Schutztopf einfach montierbar ist.

Die Aufgabe wird durch eine Schutzvorrichtung für eine Gelenkwelle gelöst, wobei die Schutzvorrichtung Folgendes aufweist: ein Befestigungselement, das derart ausgebildet ist, dass es um einen aus einem Gehäuse ragenden Wellenzapfen positionierbar und am Gehäuse befestigbar ist, einen rohrförmigen Schutztopf, der sich entlang einer Längsachse erstreckt und der derart ausgebildet ist, dass er um eine mit dem Wellenzapfen verbundene Gelenkwelle positionierbar ist, und eine Verriegelungseinrichtung zum Befestigen des Schutztopfes an dem Befestigungselement, wobei die Verriegelungseinrichtung zumindest ein Rastelement und zumindest einen Rastvorsprung aufweist, wobei entweder das Rastelement am Befestigungselement und der Rastvorsprung am Schutztopf oder das Rastelement am Schutztopf und der Rastvorsprung am Befestigungselement angeordnet ist, und wobei das Rastelement zwischen einer Raststellung und einer Freigabestellung verstellbar ist, wobei das Rastelement zur Einnahme der Raststellung federnd ausgebildet ist und in der Raststellung den Rastvorsprung hintergreift. Ferner weist der Rastvorsprung eine Stellfläche auf, die beim Montagevorgang des Schutztopfes in axialer Richtung an das Befestigungselement derart mit dem Rastelement zusammenwirkt, dass das Rastelement in die Freigabestellung überführt wird.

Die Verriegelungseinrichtung weist demnach eine Rastverbindung auf, so dass keine zum Festlegen des Schutztopfes zu befestigende Spannmittel vorgesehen sein müssen. Durch die federnd ausgestalteten Rastelemente lässt sich der Schutztopf selbsttätig beim Aufschieben auf das Befestigungselement verrasten. Das Rastelement wird elastisch federnd radial verlagert, bis das Rastelement den Rastvorsprung passiert und hinter den Rastvorsprung rastend zurückfedert. Hierbei kann das Rastelement selbst als elastisch federndes Element ausgebildet sein oder durch ein separates Federelement mit Kraft beaufschlagt sein.

In einer bevorzugten Ausführungsform weist das Befestigungselement einen Stützkragen auf, gegen den der Schutztopf radial abgestützt ist. Somit ist die radiale Position des Schutztopfes definiert vorgegeben. Der Stützkragen kann als unterbrechungsfreier umlaufender Kragen um die Längsachse ausgebildet sein. Der Stützkragen kann jedoch auch derart unterbrochen ausgeführt sein, dass sich einzelne Stützelemente, die über den Umfang verteilt angeordnet sind, ergeben.

Vorzugsweise ist in der Raststellung des Rastelements der kleinste Abstand des Rastelements zum Stützkragen geringer als der größte Abstand des Rastvorsprungs zum Stützkragen. Somit ist sichergestellt, dass in der Raststellung des Rastelements, in radialer Richtung betrachtet, der Rastvorsprung und das Rastelement in Überdeckung sind, das Rastelement den Rastvorsprung also hintergreift.

Vorzugsweise ist hierbei die Stellfläche in axialer Richtung mit zunehmendem Abstand zum Stützkragen ausgebildet. Der Rastvorsprung weist ferner eine Rastfläche auf, gegen die das Rastelement in der Raststellung axial abgestützt ist, wenn der Schutztopf vollständig montiert ist.

Ferner weist das Rastelement vorzugsweise Angriffsflächen für ein Werkzeug auf. Somit lässt sich im montierten Zustand des Schutztopfes das Rastelement mittels eines Werkzeugs von der Raststellung in die Freigabestellung überführen. Vorzugsweise ist das Rastelement zudem derart ausgebildet, dass dieses nur mit einem Werkzeug verstellt werden kann, um ein unbeabsichtigtes manuelles Lösen des Schutztopfes vom Befestigungselement zu vermeiden.

Bei einem Ausführungsbeispiel der Schutzvorrichtung kann ein Rückstellelement zwischen dem Befestigungselement und dem Schutztopf axial abgestützt sein, wobei das Rückstellelement den Schutztopf vom Befestigungselement weg mit Kraft beaufschlagt. Dies bedeutet, dass beim Montagevorgang des Schutztopfes an dem Befestigungselement der Schutztopf zunächst gegen eine Kraft des Rückstellelements auf den Stützkragen des Befestigungselements aufgeschoben wird. Sobald der Schutztopf über das Rastelement und den Rastvorsprung rastend am Befestigungselement festgelegt ist, bleibt der Schutztopf zwar grundsätzlich am Befestigungselement befestigt. Der Schutztopf bleibt jedoch mit Vorspannung in Richtung vom Befestigungselement weg mit Kraft beaufschlagt. Hierdurch wird ein mögliches Axialspiel zwischen dem Befestigungselement und dem Schutztopf herausgedrückt. Zudem wird der Schutztopf automatisch durch das Rückstellelement axial vom Befestigungselement weg bewegt, sobald das Rastelement in die Freigabestellung überführt wird.

Hierdurch wird der Demontagevorgang des Schutztopfes erleichtert.

Vorzugsweise ist das zumindest eine Rastelement an dem Befestigungselement befestigt und der Rastvorsprung am Schutztopf. Alternativ kann das Rastelement auch am Schutztopf befestigt sein und der Rastvorsprung am Befestigungselement angeordnet sein. Ferner ist der Schutztopf vorzugsweise außen um den Stützkragen angeordnet, so dass das Rastelement in radialer Richtung außerhalb des Schutztopfes angeordnet ist und einfach zu bedienen ist. Alternativ können der Schutztopf und der Stützkragen auch derart gestaltet sein, dass der Schutztopf in den Stützkragen eingeschoben wird, also innerhalb des Stützkragens angeordnet ist.

Der Rastvorsprung kann sich hierbei über einen Teil des Umfangs des Schutztopfes oder über den Gesamtumfang des Schutztopfes erstrecken.

Die Aufgabe wird ferner durch eine Schutzanordnung gelöst, welche eine Gelenkwelle und eine Schutzvorrichtung wie vorangehend beschrieben umfasst. Die Gelenkwelle ist derart gestaltet, dass sie antriebsmäßig mit einem aus einem Gehäuse ragenden Wellenzapfen verbindbar ist. Das Befestigungselement der Schutzvorrichtung ist hierbei um den Wellenzapfen positionierbar und am Gehäuse befestigbar. Der Schutztopf der Schutzvorrichtung ist derart angeordnet, dass dieser sowohl die Gelenkwelle als auch den Gelenkwellenschutz teilweise umgibt.

Somit ist hergestellt, dass ein Spalt zwischen dem Gelenkwellenschutz und dem Gehäuse durch den Schutztopf abgedeckt ist.

Ein bevorzugtes Ausführungsbeispiel wird im Folgenden anhand der Zeichnungen näher erläutert. Hierin zeigen:
- Figur 1: eine perspektivische Explosionsdarstellung einer erfindungsgemäßen Schutzvorrichtung zum Schutz einer Gelenkwelle,
- Figur 2: eine perspektivische Ansicht der Schutzvorrichtung gemäß Figur 1 mit montiertem Schutztopf,
- Figur 3: eine vergrößerte perspektivische Ansicht der Verriegelungseinheit der Schutzvorrichtung gemäß der Figuren 1 und 2,
- Figur 4: eine Seitenansicht der Verriegelungseinheit gemäß Figur 3,
- Figur 5: den Verschlussmechanismus an einer der Fügestellen im geöffneten Zustand, und
- Figur 6: den Verschlussmechanismus gemäß Figur 5 im geschlossenen Zustand.

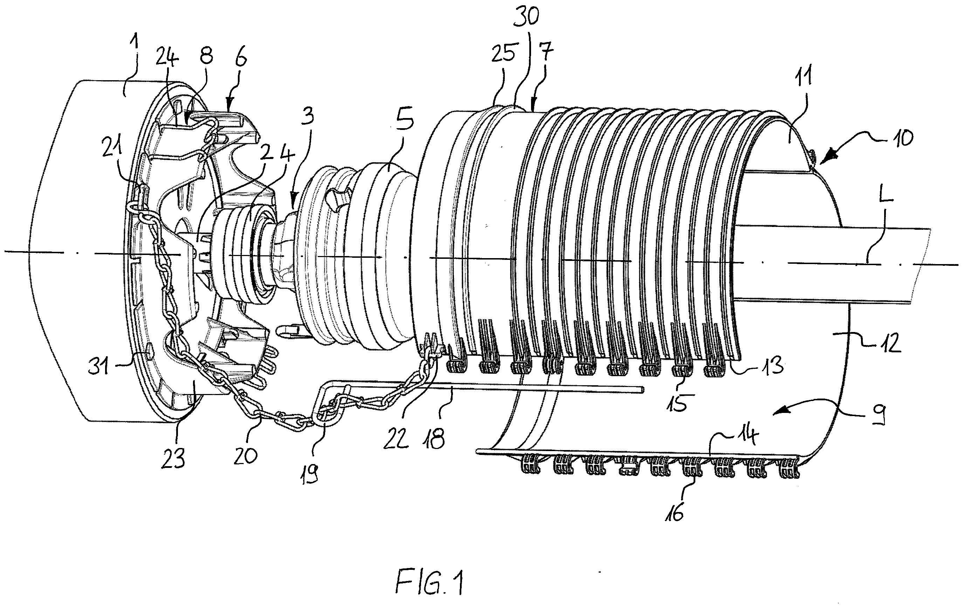

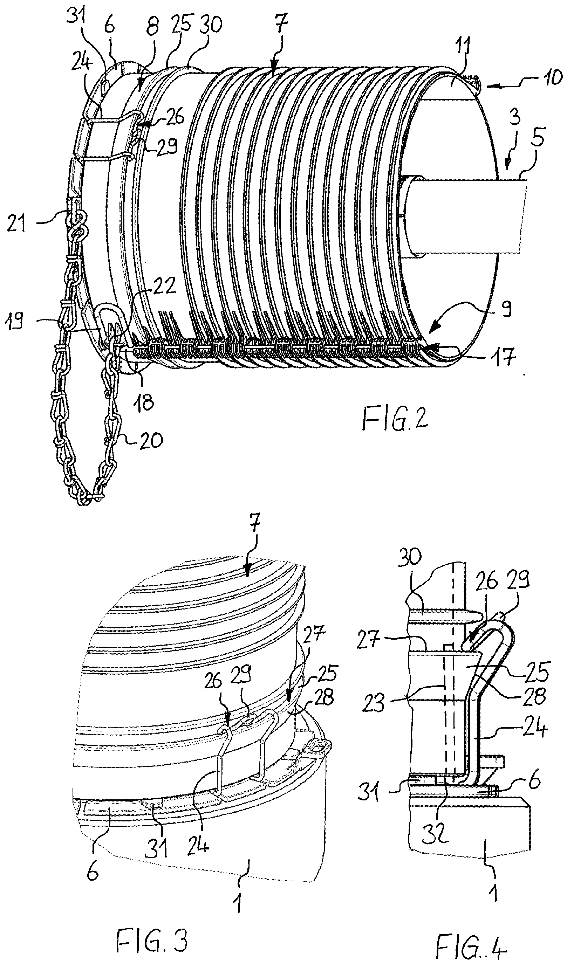

Die Figuren 1 und 2 zeigen die Schutzvorrichtung in unterschiedlichen Ansichten und werden im Folgenden zusammen beschrieben.

Die Schutzvorrichtung ist an einem Gehäuse 1 zum Beispiel eines Getriebes befestigt, wobei aus dem Gehäuse 1 ein Wellenzapfen 2 herausragt, der um eine Längsachse L angetrieben oder antreibbar ist. Es kann sich hierbei zum Beispiel um die Eingangswelle eines Getriebes eines landwirtschaftlichen anzutreibenden Geräts handeln.

Mit dem Wellenzapfen 2 ist eine Gelenkwelle 3 antriebsmäßig verbunden, so dass diese mit dem Wellenzapfen 2 um die Längsachse L umläuft. Hierzu ist ein Verschluss 4 vorgesehen, mit dem die Gelenkwelle von dem Wellenzapfen 2 lösbar und verriegelbar ist. Zur Drehmomentübertragung dient eine übliche Wellenverzahnung.

Um Bedienpersonal vor drehenden Bauteilen zu schützen, ist ein Gelenkwellenschutz 5 vorgesehen, der auf der Gelenkwelle 3 drehbar gelagert ist und diese aufnimmt und der gegenüber einem stehenden Bauteil, zum Beispiel dem Gehäuse 1 oder einem anderen Gehäuse, drehfest gehalten ist. Hierzu kann zum Beispiel eine Kette (nicht gezeigt) dienen, die einerseits mit einem stehenden Bauteil und andererseits mit dem Gelenkwellenschutz 5 verbunden ist und somit verhindert, dass sich der Gelenkwellenschutz 5 zusammen mit der Gelenkwelle 3 dreht.

Wie in Figur 1 ersichtlich ist, ist ein axialer Bereich zwischen dem Getriebegehäuse 1 und dem Ende des Gelenkwellenschutzes 5 ungeschützt, das bedeutet, dass Bedienpersonal in diesen Bereich hineingreifen könnte und eine Verletzungsgefahr besteht. Um diesen Bereich ebenfalls abzudecken, ist die erfindungsgemäße Schutzvorrichtung vorgesehen. Die Schutzvorrichtung umfasst ein Befestigungselement 6 und einen Schutztopf 7. Das Befestigungselement 6 ist fest am Gehäuse 1 befestigt. Über eine Verriegelungseinrichtung 8 kann der Schutztopf 7 lösbar mit dem Befestigungselement 6 verbunden werden. Der Schutztopf 7 kann geöffnet werden (Figur 1) um, wie nachfolgend noch näher erläutert wird, um die Gelenkwelle 3 herum angeordnet zu werden. Im geschlossenen Zustand (Figur 2) ist der Schutztopf 7 rohrförmig gestaltet und, im mit dem Befestigungselement 6 verriegelten Zustand, koaxial zur Längsachse L angeordnet. Hierbei deckt der Schutztopf 7 den Bereich der Gelenkwelle 3 zwischen dem Gehäuse 1 und dem Gehäuse 1 zugewandten Ende des Gelenkwellenschutzes 5 ab, so dass ein Hineingreifen in drehende Bauteile der Gelenkwelle 3 oder an den sich drehenden Wellenzapfen 2 verhindert wird.

Der Schutztopf 7 weist eine erste Fügestelle 9 und eine zweite Fügestelle 10 auf. Die Fügestellen 9, 10 verlaufen parallel zur Längsachse L und teilen den Schutztopf 7 in ein erstes Schalenelement 11 und in ein zweites Schalenelement 12. Die Fügestellen 9, 10 sind im vorliegenden Fall identisch ausgebildet, so dass die beiden Schalenelemente 11, 12 identisch gestaltet sein können. Hierdurch wird vermieden, dass unterschiedliche Werkzeuge für die Herstellung des ersten Schalenelements 11 und des zweiten Schalenelements 12 bereitgestellt werden müssen. Zudem reduziert sich hierdurch die Teilevielfalt der Schutzvorrichtung. Im Folgenden wird daher die erste Fügestelle 9 exemplarisch näher erläutert.

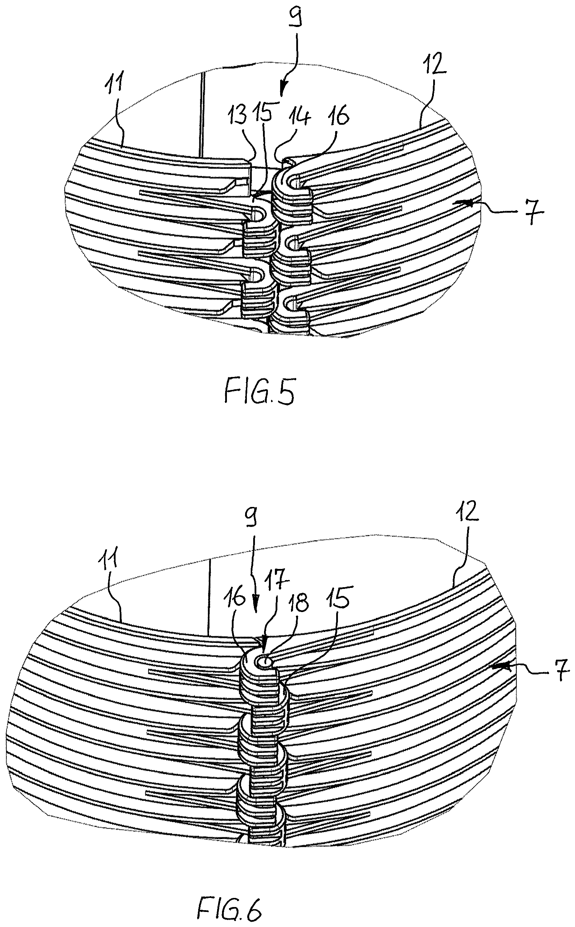

Die erste Fügestelle 9 ist durch eine Längskante 13 des ersten Schalenelements 11 und eine Längskante 14 des zweiten Schalenelements 12 gebildet, wobei die beiden Längskanten 13, 14 im geschlossenen Zustand des Schutztopfes 7 (Figur 2) in Anlage zueinander sind und miteinander verbunden sind. Zum Verbinden der Längskanten 13, 14 ist ein Verschlussmechanismus mit Formschlusselementen in Form von Haken 15 an der Längskante 13 des ersten Schalenelements 11 und mit Haken 16 entlang der Längskante 14 des zweiten Schalenelements 12 vorgesehen. Die Haken 15, 16 der beiden Längskanten 13, 14 sind jeweils von der jeweiligen anderen Längskante 13, 14 weggerichtet geöffnet. Zudem greifen die Haken 15 der Längskante 13 des ersten Schalenelements 11 in axiale Lücken zwischen den Haken 16 entlang der Längskante 14 des zweiten Schalenelements 12 ein, wenn sich der Schutztopf 7 in seiner geschlossenen Position befindet, wie dies in den Figuren 5 und 6 verdeutlicht ist. Im geschlossenen Zustand (Figuren 2 und 6) bilden die Haken 15, 16 einen Verbindungskanal 17, der sich parallel zur Längsachse L erstreckt. In den Verbindungskanal 17 wird ein Verbindungsstift 18 axial eingeschoben, so dass sich die Haken 15, 16 beim Versuch, die beiden Schalenelemente 11, 12 voneinander weg zu bewegen, gegen den Verbindungsstift 18 in Umfangsrichtung abstützen und ein Öffnen der Schalenelemente 11, 12 somit verhindert wird. Um zu vermeiden, dass der Verbindungsstift 18 zu weit in einer Richtung durch den Verbindungskanal 17 hindurchgeschoben werden kann, weist der Verbindungsstift 18 einen gegenüber dem Durchmesser des Verbindungskanals 17 erweiterten Kopfabschnitt in Form einer Öse 19 auf. Die Öse 19 befindet sich an dem dem Befestigungselement 6 zugewandten Ende des Verbindungskanals 17 bzw. an dem dem Befestigungselement 6 zugewandten Ende des Schutztopfs 7. Das Befestigungselement 6 ist in axialer Richtung betrachtet in Überdeckung mit dem Verbindungsstift 18 bzw. der Öse 19 angeordnet. Der Verbindungsstift 18 stößt daher beim Versuch, diesen aus dem Verbindungskanal 17 herauszubewegen, gegen das Befestigungselement 6, ohne dass der Verbindungsstift 18 den Verbindungskanal 17 vollständig verlassen hat. Somit wird im montierten Zustand gemäß Figur 2 verhindert, dass der Verbindungsstift 18 unbeabsichtigt aus dem Verbindungskanal 19 herausgezogen werden kann oder sich aufgrund von Vibration herausbewegt.

Die zweite Fügestelle 10 kann identisch ausgebildet sein, wobei ein identischer Verbindungsstift 18 vorgesehen ist. Die zweite Fügestelle 10 kann sich auch dahingehend von der ersten Fügestelle 9 unterscheiden, dass ein abgewandelter Verbindungsstift vorgesehen wird, der zum Beispiel keine Öse 19 aufweist, sondern an beiden Enden einen erweiterten Abschnitt durch Umformung des Verbindungsstifts 18 aufweist, so dass der Schutztopf 7 an der zweiten Fügestelle 10 nicht geöffnet werden kann, sondern ausschließlich als Scharnier dient. Sofern die beiden Fügestellen 9, 10 identisch ausgebildet sind, also identische Verbindungsstifte 18 aufweisen, wie an der ersten Fügestelle 9 gezeigt, können beide Fügestellen 9, 10 als Scharnier dienen und beide Fügestellen 9, 10 als Verschlussmechanismus, in dem der Schutztopf 7 geöffnet werden kann.

Zur Montage des Schutztopfes 7 lässt sich nun der Verbindungsstift 18 aus dem Verbindungskanal 17 der ersten Fügestelle 9 herausziehen, so dass die beiden Schalenelemente 11, 12 um die zweite Fügestelle 10 scharniert werden können und der Schutztopf 7 geöffnet wird. Der Schutztopf 7 kann dann, wie in Figur 1 ersichtlich, in radialer Richtung zur Längsachse L um die Gelenkwelle 3 herum positioniert werden. Sobald sich der geöffnete Schutztopf 7 in dieser Position befindet, können die Schalenelemente 11, 12 zueinander bewegt werden, so dass die Fügestelle 9 geschlossen wird. Dann wird der Verbindungsstift 18 in den Verbindungskanal 17 eingeschoben, so dass der Schutztopf 7 geschlossen ist und nicht mehr geöffnet werden kann.

Um eine Verliersicherung zu bieten, ist ein Sicherungselement in Form einer Kette 20 vorgesehen. Die Kette 20 ist an einem Ende an einer Sicherungsöse 21 des Befestigungselements 3 befestigt und an einem anderen Ende an einer Sicherungsöse 22 des ersten Schalenelements 11 befestigt. Ferner ist die Kette 20 durch die Öse 19 des Verbindungsstifts 18 hindurchgeführt, so dass im geöffneten Zustand des Schutztopfs 7, wie in Figur 1 dargestellt, sowohl der Schutztopf 7 als auch der Verbindungsstift 18 verliergesichert gegenüber dem Befestigungselement 6 gehalten sind. Alternativ könnte die Kette 20 auch mit einem Kettenglied an dem Verbindungsstift 18 fest verbunden sein. Darüber hinaus könnte anstelle einer Kette auch ein Seil oder ein Draht verwendet werden.

Sobald der Schutztopf 7 geschlossen ist, lässt sich dieser axial in Richtung der Längsachse L auf das Befestigungselement 6 aufschieben und mittels der Verriegelungseinrichtung 8 an dem Befestigungselement 6 festlegen.

Hierzu weist das Befestigungselement 6 einen koaxial zur Längsachse L angeordneten Stützkragen 23 auf, auf den der Schutztopf 7 aufgeschoben wird. Alternativ ist es auch denkbar, dass der Stützkragen 23 derart gestaltet ist, dass der Schutztopf 7 in den Stützkragen 23 eingesteckt wird. Der Stützkragen 23 dient zur radialen Abstützung des Schutztopfs 7.

Die Verriegelungseinrichtung umfasst zwei diametral gegenüberliegend angeordnete Rastelemente 24, von denen im Folgenden eines repräsentativ beschrieben wird.

Grundsätzlich ist es auch möglich, drei oder mehr Rastelemente anzuordnen. Ferner umfasst die Verriegelungseinrichtung einen Rastvorsprung 25. In der vorliegenden Ausführungsform ist das Rastelement 24 am Befestigungselement 6 angeordnet und der Rastvorsprung 25 am Schutztopf 7. Grundsätzlich können diese Elemente jedoch auch umgekehrt angeordnet sein, d.h. der Rastvorsprung 25 kann am Befestigungselement 6 und das Rastelement 24 am Schutztopf 7 angeordnet sein.

Das Rastelement 24 ist als Federelement in Form eines Federbügels gestaltet. Das Rastelement 24 ist demnach elastisch ausgebildet und kann aus der in Figur 4 dargestellten Rastposition in eine radial nach außen gebogene Freigabestellung überführt werden. Denkbar ist auch, dass das Rastelement 24 eine separate Feder aufweist, welche ein starres Element federnd bewegt.

In der verrasteten Position stützt sich das Rastelement 24 mit einem Rastabschnitt 26 axial gegen eine Rastfläche 27 des Rastvorsprungs 25 ab. Der Rastvorsprung 25 ist als umlaufender Vorsprung über den gesamten Umfang des Schutztopfs 7 ausgebildet. Die Rastfläche 27 ist senkrecht zur Längsachse L angeordnet. Die Rastfläche 27 weist vom Gehäuse 1 weg, so dass der Schutztopf 7 am Befestigungselement 6 verrastet ist.

Zur Montage lässt sich der Schutztopf 7 auf den Stützkragen 23 aufschieben, wobei der Schutztopf 7 automatisch verrastet wird. Hierzu weist der Rastvorsprung 25 eine Stellfläche 28 auf, die beim Montagevorgang des Schutztopfs 7 in axialer Richtung derart mit dem Rastelement 24 zusammenwirkt, dass das Rastelement 24 in seine Freigabestellung radial nach außen überführt wird. Hierzu erstreckt sich die Stellfläche 28 in axialer Richtung mit zunehmendem Abstand vom Stützkragen 23, der in Figur 4 mit unterbrochenen Linien angedeutet ist. Der Rastvorsprung 25 ist im Bereich der Stellfläche 28 kegelstumpfförmig gestaltet, wobei sich die Stellfläche 28, welche die Außenfläche des Kegelstumpfs darstellt, in Richtung vom Befestigungselement 6 bzw. vom Gehäuse 1 weg hin öffnet. Somit drückt die Stellfläche 28 beim Bewegen des Schutztopfs 7 in Richtung zum Gehäuse 1 das Rastelement 24 radial nach außen, bis der Rastabschnitt 26 den Rastvorsprung 25 hintergreift und sich axial gegen die Rastfläche 27 abstützt.

Der Rastabschnitt 26 des Rastelements 24 ist hierbei ebenfalls derart schräg zur Längsachse L angestellt, dass sich eine Vorderkante 32 des Schutztopfs 7 zum besseren Einfädeln des Schutztopfs 7 gegen den Rastabschnitt 26 abstützen kann und gegebenenfalls das Rastelement 24 auch schon etwas radial nach außen bewegen kann.

Um den Schutztopf 7 wieder vom Befestigungselement 6 zu lösen, können die Rastelemente 24 radial nach außen gedrückt werden. Hierzu weisen die Rastelemente 24 jeweils eine Ausbuchtung 29 als Angriffsmittel für ein Werkzeug auf. Als Werkzeug kann zum Beispiel ein Schraubenzieher dienen, der sich einerseits gegen die Ausbuchtung 29 und andererseits gegen einen Kragen 30 oder gegen die Stellfläche 28 am Schutztopf 7 abstützt, so dass das Rastelement 24 vom Schutztopf 7 weg radial nach außen gehebelt werden kann. Besonders vorteilhaft ist hierbei, dass der Schraubenzieher in etwa parallel zur Längsachse L angesetzt werden kann und nicht in radialer Richtung angesetzt werden muss, so dass ein Lösen des Schutztopfs 7 auch bei beengten Verhältnissen möglich ist.

Um ein leichteres Entfernen des Schutztopfs 7 von dem Befestigungselement 6 zu ermöglichen, sind Rückstellelemente in Form von Gummipuffern 31 am Befestigungselement 6 vorgesehen. Im montierten Zustand stützt sich der Schutztopf 7 gegen die Gummipuffer 31 ab, die dann elastisch vorgespannt bleiben. Sobald die Rastelemente 24 in ihre Freigabeposition überführt werden, drücken die Gummipuffer 31 den Schutztopf 7 geringfügig axial vom Befestigungselement 6 weg, so dass die Rastelemente 24 nicht wieder hinter die Rastfläche 27 greifen können, sondern der Rastabschnitt 26 außen an der Stellfläche 28 an dem Rastvorsprung 25 in Anlage kommen. Ein nochmaliges unbeabsichtigtes Verrasten wird somit verhindert.

### Bezugszeichenliste

- 1: Gehäuse
- 2: Wellenzapfen
- 3: Gelenkwelle
- 4: Verschluss
- 5: Gelenkwellenschutz
- 6: Befestigungselement
- 7: Schutztopf
- 8: Verriegelungseinrichtung
- 9: erste Fügestelle
- 10: zweite Fügestelle
- 11: erstes Schalenelement
- 12: zweites Schalenelement
- 13: Längskante
- 14: Längskante
- 15: Haken
- 16: Haken
- 17: Verbindungskanal
- 18: Verbindungsstift
- 19: Öse
- 20: Kette
- 21: Sicherungsöse
- 22: Sicherungsöse
- 23: Stützkragen
- 24: Rastelement
- 25: Rastvorsprung
- 26: Rastabschnitt
- 27: Rastfläche
- 28: Stellfläche
- 29: Ausbuchtung
- 30: Kragen
- 31: Gummipuffer
- 32: Vorderkante

- L: Längsachse

## Patentansprüche

1. Schutzvorrichtung für eine Gelenkwelle (3), wobei die Schutzvorrichtung Folgendes aufweist:
ein Befestigungselement (6), das derart ausgebildet ist, dass es um einen aus einem Gehäuse (1) ragenden Wellenzapfen (2) positionierbar und am Gehäuse (1) befestigbar ist,
einen rohrförmigen Schutztopf (7), der sich entlang einer Längsachse (L) erstreckt und der derart ausgebildet ist, dass er um eine mit dem Wellenzapfen (2) verbundene Gelenkwelle (3) positionierbar ist, und
eine Verriegelungseinrichtung (24, 25) zum Befestigen des Schutztopfes (7) an dem Befestigungselement (6),
**dadurch gekennzeichnet,**
**dass** die Verriegelungseinrichtung zumindest ein Rastelement (24) und zumindest einen Rastvorsprung (25) aufweist, wobei entweder das Rastelement (24) am Befestigungselement (6) und der Rastvorsprung (25) am Schutztopf (7) oder das Rastelement am Schutztopf und der Rastvorsprung am Befestigungselement angeordnet ist,
**dass** das Rastelement (24) zwischen einer Raststellung und einer Freigabestellung verstellbar ist, wobei das Rastelement (24) zur Einnahme der Raststellung federnd ausgebildet ist und in der Raststellung den Rastvorsprung (25) hintergreift, und
**dass** der Rastvorsprung (25) eine Stellfläche (28) aufweist, die beim Montagevorgang des Schutztopfes (7) in axialer Richtung an das Befestigungselement (6) derart mit dem Rastelement (24) zusammenwirkt, dass das Rastelement (24) in die Freigabestellung überführt wird.

2. Schutzvorrichtung nach Anspruch 1,
**dadurch gekennzeichnet,**
**dass** das Befestigungselement (6) einen Stützkragen (23) aufweist, gegen den der Schutztopf (7) radial abgestützt ist.

3. Schutzvorrichtung nach Anspruch 2,
**dadurch gekennzeichnet,**
**dass** in der Raststellung des Rastelements (24) der kleinste Abstand des Rastelements (24) zum Stützkragen (23) geringer ist als der größte Abstand des Rastvorsprungs (25) zum Stützkragen (23).

4. Schutzvorrichtung nach einem der vorangehenden Ansprüche,
**dadurch gekennzeichnet,**
**dass** sich die Stellfläche (28) in axialer Richtung mit zunehmendem Abstand zum Stützkragen (23) erstreckt und
**dass** der Rastvorsprung (25) eine Rastfläche (27) aufweist, gegen die das Rastelement (24) in der Raststellung axial abgestützt ist.

5. Schutzvorrichtung nach einem der vorangehenden Ansprüche,
**dadurch gekennzeichnet,**
**dass** das Rastelement (24) als Federelement gestaltet ist.

6. Schutzvorrichtung nach einem der vorangehenden Ansprüche,
**dadurch gekennzeichnet,**
**dass** das Rastelement (24) Angriffsflächen (29) für ein Werkzeug aufweist.

7. Schutzvorrichtung nach einem der vorangehenden Ansprüche,
**dadurch gekennzeichnet,**
**dass** ein Rückstellelement (31) vorgesehen ist, das am Befestigungselement (6) und am Schutztopf (7) axial abgestützt ist, und
**dass** das Rückstellelement (31) den Schutztopf (7) vom Befestigungselement (6) weg mit Kraft beaufschlagt.

8. Schutzvorrichtung nach einem der vorangehenden Ansprüche,
**dadurch gekennzeichnet,**
**dass** das Rastelement (24) an dem Befestigungselement (6) befestigt ist.

9. Schutzvorrichtung nach einem der Ansprüche 2 bis 8,
**dadurch gekennzeichnet,**
**dass** der Schutztopf (7) außen um den Stützkragen (23) angeordnet ist.

10. Schutzvorrichtung nach einem der vorangehenden Ansprüche,
**dadurch gekennzeichnet,**
**dass** sich der Rastvorsprung (25) zumindest über einen Teil des Umfangs des Schutztopfes (7) erstreckt.

11. Schutzanordnung, die Folgendes aufweist:
eine Gelenkwelle (3) mit einem die Gelenkwelle (3) umgebenden Gelenkwellenschutz (5), die derart gestaltet ist, dass sie antriebsmäßig mit einem aus einem Gehäuse (1) ragenden Wellenzapfen (2) verbindbar ist, und
eine Schutzvorrichtung nach einem der vorangehenden Ansprüche, wobei das Befestigungselement (6) um den Wellenzapfen (2) positionierbar und am Gehäuse (1) befestigbar ist und wobei der Schutztopf (7) der Schutzvorrichtung sowohl die Gelenkwelle (3) als auch den Gelenkwellenschutz (5) teilweise umgibt.

## Claims

1. Protective device for a universal shaft (3), comprising:
an attachment element (6) which is design such that it can be positioned around a shaft journal (2) projecting from a housing (1) and can be attached to said housing (1),
a tubular protective guard (7), extending along a longitudinal axis (L) and which is design such that it can be positioned around a universal shaft (3) connected to the shaft journal (2), and
a latching device (24, 25) for attaching the protective guard (7) to the attachment element (6),
**characterized in**
**that** the latching device has at least one latching element (24) and at least one latching projection (25), wherein either the latching element (24) is arranged on the attachment element (6) and the latching projection (25) is arranged on the protective guard (7) or the latching element is arranged on the protective guard and the latching projection is arranged on the attachment element,
**that** the latching element (24) is displaceable between a latched position and a release position, wherein the latching element (24) is, for taking up the latched position, formed elastically and engages behind the latching projection (25) in the latched position, and
**that** the latching projection (25) has a setting face (28) which interacts during the assembly of the protective guard (7) in axial direction on the attachment element (6) with the latching element (24) such that the latching element (24) is displaced into the release position.

2. Protective device according to claim 1,
**characterized in**
**that** the attachment element (6) has a support collar (23) against which the protective guard (7) is radially supported.

3. Protective device according to claim 2,
**characterized in**
**that** in the latched position of the latching element (24) the smallest distance of the latching element (24) to the support collar (23) is smaller than the largest distance of the latching projection (25) to the support collar (23).

4. Protective device according to one of the preceding claims,
**characterized in**
**that** the setting face (28) extends in axial direction with increasing distance to the support collar (23) and
**that** the latching projection (25) has a latching face (27) against which the latching element (24) is axially supported in the latched position.

5. Protective device according to one of the preceding claims,
**characterized in**
**that** the latching element (24) is formed as a spring element.

6. Protective device according to one of the preceding claims,
**characterized in**
**that** the latching element (24) has engagement faces (29) for a tool.

7. Protective device according to one of the preceding claims,
**characterized in**
**that** a return element (31) is provided which is axially supported on the attachment element (6) and on the protective guard (7), and
**that** the return element (31) biases the protective guard (7) in a direction away from the attachment element (6).

8. Protective device according to one of the preceding claims,
**characterized in**
**that** the latching element (24) is attached to the attachment element (6).

9. Protective device according to one of claims 2 to 8,
**characterized in**
**that** the protective guard (7) is arranged externally around the support collar (23).

10. Protective device according to one of the preceding claims,
**characterized in**
**that** the latching projection (25) extends at least partially along the circumference of the protective guard (7).

11. Protective arrangement comprising:
a universal shaft (3) with a universal shaft protection (5) encasing the universal shaft (3) design such that it can be drivingly connected to a shaft journal (2) projecting from a housing (1), and
a protective device according to any one of the preceding claims wherein the attachment element (6) can be positioned around the shaft journal (2) and can be attached to the housing (1) and wherein the protective guard (7) of the protective device encloses partially the universal shaft (3) as well as the universal shaft protection (5).

## Revendications

1. Dispositif de protection d'un arbre de transmission (3), le dispositif de protection comportant ce qui suit :
un élément de fixation (6), qui est conçu de sorte à pouvoir être positionné autour d'un tourillon d'arbre (2) saillant hors d'un carter (1) et à pouvoir être fixé sur le carter (1),
un barillet de protection (7) tubulaire, qui s'étend de long d'un axe longitudinal (L) et qui est conçu de sorte à pouvoir être positionné autour d'un arbre de transmission (3) relié avec le tourillon d'arbre (2) et
un système de verrouillage (24, 25) destiné à fixer le barillet de protection (7) sur l'élément de fixation (6),
caractérisé
le système de verrouillage comporte au moins un élément d'enclenchement (24) et au moins une saillie d'enclenchement (25), soit l'élément d'enclenchement (24) étant placé sur l'élément de fixation (6) et la saillie d'enclenchement (25) sur le barillet de protection (7) ou l'élément d'enclenchement étant placé sur le barillet de protection et la saillie d'enclenchement sur l'élément de fixation,
en ce que l'élément d'enclenchement (24) est ajustable entre une position d'enclenchement et une position de libération, pour adopter la position d'enclenchement, l'élément d'enclenchement (24) étant conçu de manière résiliente et dans la position d'enclenchement, accrochant par l'arrière la saillie d'enclenchement (25) et
en ce que la saillie d'enclenchement (25) comporte une surface d'appui (28) qui lors du processus de montage du barillet de protection (7) dans la direction axiale sur l'élément de fixation (6) coopère avec l'élément d'enclenchement (24) de telle sorte que l'élément d'enclenchement (24) soit transféré dans la position de libération.

2. Dispositif de protection selon la revendication 1, **caractérisé en ce que** l'élément de fixation (6) comporte un collet d'appui (23) contre lequel le barillet de protection (7) est soutenu radialement.

3. Dispositif de protection selon la revendication 2, **caractérisé en ce que** dans la position d'enclenchement de l'élément d'enclenchement (24), le plus petit écart entre l'élément d'enclenchement (24) et le collet d'appui (23) est inférieur au plus grand écart entre la saillie d'enclenchement (25) et le collet d'appui (23).

4. Dispositif de protection selon l'une quelconque des revendications précédentes, **caractérisé en ce que** la surface d'appui (28) s'étend en direction axiale avec un écart croissant par rapport au collet d'appui (23) et
**en ce que** la saillie d'enclenchement (25) comporte une surface d'enclenchement (27) contre laquelle l'élément d'enclenchement (24) est soutenu axialement dans la position d'enclenchement.

5. Dispositif de protection selon l'une quelconque des revendications précédentes, **caractérisé en ce que** l'élément d'enclenchement (24) est conçu sous la forme d'un élément à ressort.

6. Dispositif de protection selon l'une quelconque des revendications précédentes, **caractérisé en ce que** l'élément d'enclenchement (24) comporte des surfaces d'engagement (29) pour un outil.

7. Dispositif de protection selon l'une quelconque des revendications précédentes, **caractérisé**
**en ce qu'**il est prévu un élément de rappel (31) qui est soutenu axialement sur l'élément de fixation (6) et sur le barillet de protection (7) axial et
**en ce que** l'élément de rappel (31) éloigne le barillet de protection (7) de l'élément de fixation (6) en le soumettant à une force.

8. Dispositif de protection selon l'une quelconque des revendications précédentes, **caractérisé en ce que** l'élément d'enclenchement (24) est fixé sur l'élément de fixation (6).

9. Dispositif de protection selon l'une quelconque des revendications 2 à 8, **caractérisé en ce que** le barillet de protection (7) est placé à l'extérieur autour du collet d'appui (23).

10. Dispositif de protection selon l'une quelconque des revendications précédentes, **caractérisé en ce que** la saillie d'enclenchement (25) s'étend au moins sur une partie de la circonférence du barillet de protection (7).

11. Ensemble de protection, qui comporte ce qui suit :
un arbre de transmission (3) avec une protection d'arbre de transmission (5) entourant l'arbre de transmission (3), qui est conçue de sorte à être reliée en entraînement avec un tourillon d'arbre (2) saillant hors d'un carter (1) et
un dispositif de protection selon l'une quelconque des revendications précédentes, l'élément de fixation (6) étant susceptible d'être positionné autour du tourillon d'arbre (2) et d'être fixé sur le carter (1) et le barillet de protection (7) du dispositif de protection entourant en partie aussi bien l'arbre de transmission (3) qu'également la protection d'arbre de transmission (5).
